# EUROPEAN PATENT APPLICATION

(11) **EP 2 436 515 A1**
(43) Date of publication of application: **04.04.2012**
(21) Application number: 11183415.6
(22) Date of filing: 30.09.2011
(51) Int. Cl.: B32B 7/04, B32B 7/06, D06N 7/00, E04F 15/02, A47G 27/00

(54) **Manufactured product for covering surfaces**

(30) Priority: 30.09.2010 IT MO20100272
(71) Applicant: Priante Pelleitaliana S.r.l., 36071 Arzignano (VI) (IT)
(72) Inventor: Brambilla, Guido, 27100 Pavia (IT)
(74) Representative: Brunacci, Marco

(57) **Abstract**

The manufactured product (1) for covering surfaces comprises a substantially sheet-shaped supporting element (2) and a plurality of substantially sheet-shaped decorative elements (3) comprising an outer decorative layer (4) in leather and an attachment layer (5) suitable for adhering in a removable way to the supporting element (2).

## Description

The present invention relates to a manufactured product for covering surfaces. It is known that in the interior and outdoor furnishing industry, the use is increasing of floors, wall coverings and complementary furnishing items, such as carpets or the like, made of leather.

In this respect, it is underlined that in the present treatise, by the word leather shall not only be meant tanned animal skins, such as hide or the like, but rather every type of leather, both natural and artificial, including synthetic leathers, eco-leather or imitation leather.

To make leather floors, for example, different types of sheets and tiles are already available on the market, made of stoneware or other ceramic materials, having a visible surface on which a layer of leather is glued.

The sheets and tiles made this way are manufactured, distributed and installed substantially using the same procedures used for ceramic tiles and, like the latter, are laid on the floor with interposition of glues and cements.

These manufactured products substantially have the same drawbacks as traditional ceramic floors, including the fact that they are very heavy, difficult to transport and, once installed, can no longer be removed, except by seriously damaging them.

Above all this latter drawback, which prevents moving and using such manufactured products again, is particularly serious, especially taking into account the very high cost of the leather used to manufacture these products, which considerably restricts their distribution.

In this respect, it is underlined that the floor of a home, office or the like is tied to the building in which it is installed and, in the event of the owner having to move, it cannot be moved together with the furniture and other complementary furnishing items, thus further restricting the number of possible buyers of such types of products.

As an alternative of the above manufactured products, the use is also known of coverings made up of a thin layer of plastic, e.g., PVC, onto which the leather is glued.

Such coverings are intended to be installed in an immovable way using glues, adhesives or the like, in the same way as ceramic tiles or, alternatively, they can be left simply resting on the surface.

Although these coverings are considerably less heavy and simpler to transport compared to ceramic sheets covered in leather, they nevertheless still have a number of drawbacks.

In the case of gluing to the floor, in fact, these coverings cannot be removed and re-used either and, furthermore, they are subject to far from negligible heat expansion phenomena which can cause the occurrence of defects and irregularities in the event of the glue not being uniformly spread.

In the event of being simply rested on the floor on the other hand, these coverings can be unstable and, following use and being walked on, they can move from the intended initial position and force the user to carry out awkward and sometimes frequent repositioning jobs.

With reference to the use of leather in making complementary furnishing items such as carpets or the like, it must be emphasised that these products consist of a substrate in fabric or the like on which the leather is applied according to a pre-established design.

The leather is usually applied by means of hand stitching, which results in a considerable increase in manufacturing costs, to be added to the already considerable cost of the raw material and which, inevitably, affects the retail price, with the risk of making the product less attractive to customers.

To this must be added that leather carpets are usually much more rigid than traditional fabric carpets, taking into account that leather is less flexible and bendable.

In numerous cases however, these carpets cannot be folded on themselves and have to be transported flat, which consequently results in higher packing and transport costs.

The difficulty in transporting these carpets from one place to another, furthermore, totally rules out the possibility of testing the carpet inside the premises to be furnished before making the purchase.

Nor should it be forgotten as well that all the above types of manufactured products having leather surfaces, both those to be laid on the floor and the carpets, are distinguished by very restricted possibilities of design and/or colour personalisation and modulation, and these are usually pre-established during the manufacturing stage.

To cater to the different tastes of the clientele therefore, these manufactured products are usually made in many different models and, to enable consumers to see them before buying, their sales outlets have to inconveniently be equipped with large and spacious warehouses in which to store them, with consequent increase in logistic and running costs.

The main object of the present invention is to provide a manufactured product for covering surfaces which, with particular aesthetic appeal, can be used in a practical, easy and functional way to cover floors, walls and surfaces in general, to furnish both indoor and outdoor environments.

A further object of the present invention is to provide a manufactured product for covering surfaces that can be applied and laid stably in a very simple and practical way and, if need be, can be removed without any particular difficulty, so it can be used again in another environment to be furnished.

Not the last object of the present invention is to provide a manufactured product for covering surfaces that can be manufactured, transported and installed at a particularly reduced cost.

Another object of the present invention is to provide a manufactured product for covering surfaces that can be personalised according to the final consumer's tastes and needs.

Another object of the present invention is to provide a manufactured product for covering surfaces that allows overcoming the mentioned drawbacks of the state of the art in the ambit of a simple, rational, easy and effective to use solution. The above mentioned objects are achieved by the present manufactured product for covering surfaces, characterised by the fact that it comprises a substantially sheet-shaped supporting element and a plurality of substantially sheet-shaped decorative elements comprising an outer decorative layer in leather and an attachment layer suitable for adhering in a removable way to said supporting element.

Other characteristics and advantages of the present invention will become more evident from the description of some preferred, but not sole, embodiments of a manufactured product for covering surfaces, illustrated purely as an example but not limited to the annexed drawings in which:
Figure 1 is a perspective view of the manufactured product according to the invention;
Figure 2 is a crosswise section view of a portion of the manufactured product of figure 1;
Figure 3 is a perspective view of the manufactured product of figure 1 in a packaging and transport configuration;
Figure 4 is a perspective view of an alternative embodiment of the manufactured product according to the invention.

With particular reference to such illustrations, globally indicated by 1 is a manufactured product for covering surfaces.

The manufactured product 1 comprises a substantially sheet-shaped supporting element 2 and a plurality of substantially sheet-shaped decorative elements 3. The decorative elements 3 in turn comprise an outer decorative layer 4, made of leather, and an attachment layer 5 made of a material suitable for adhering in a removable way to the supporting element 2.

In particular the attachment layer 5 and the supporting element 2 are associable with a "hook and loop" type system, one between the attachment layer 5 and the supporting element 2 being made of a "hook" type material and the other between the attachement layer 5 and the supporting element 2 being made of a "loop" type material.

In this respect, it must be underlined that in the present treatise by materials of the "hook" type and by materials of the "loop" type are meant materials which exploit the operating principle adopted in the commercial product called VelcroⓇ and which consist, respectively, of a strip of fabric having hooks 6 ("hook"), which appear from the bottom of the fabric and are made of hard but flexible material, and a hairy fabric, with rigid bottom from which appear hairy rings 7 ("loop").

More in detail, the attachment layer 5 consists of a commercial product Velcro fabric of the "hook" type, while the supporting element 2 is made of an at least partially hairy fabric and, preferably, consists of a moquette or the like. Alternative embodiments cannot however be ruled out wherein, instead of a moquette, the supporting element 2 consists of a VelcroⓇ fabric of the "loop" type; in this respect, however, it must be underlined that the particular solution of using a moquette is rather beneficial taking into account the greater availability of moquette colours on the market compared to the limited availability of velcroⓇ material colours.

The leather used to make the outer decorative layer 4 is selected from the list comprising: natural leather, imitation leather and eco-leather.

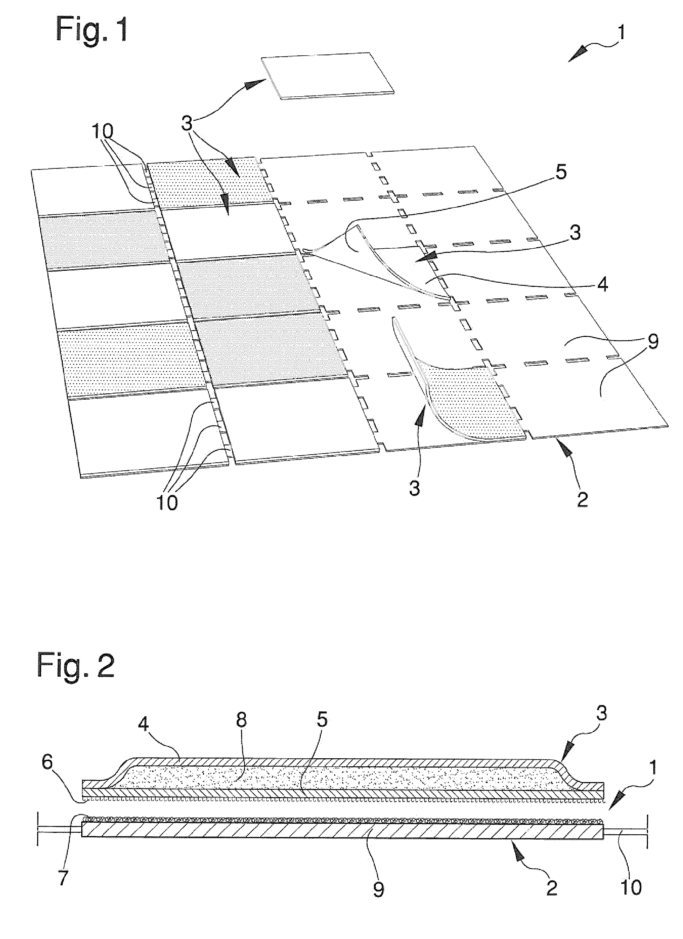

In the particular embodiment shown in detail in figure 2 the decorative elements 3 comprise an intermediate layer 8, made of a soft material such as foam rubber or the like, which is placed between the outer decorative layer 4 and the attachment layer 5.

The intermediate layer 8 gives the decorative elements 3 greater thickness and a slightly convex/three-dimensional shape.

The outer decorative layer 4 is associated with the attachment layer 5 by interposition of a layer of adhesive material, such as glue or the like, and, in the particular embodiment shown in figure 2, it is associated with the attachment layer 5 only in correspondence to the perimeter portion of the decorative elements 3, in the central portion being placed the intermediate layer 8. Alternative embodiments are however possible wherein the intermediate layer is not present, in this case the outer decorative layer 4 is in contact with the entire surface of the attachment layer 5.

Usefully, the supporting element 2 is divided into a plurality of housing seats 9 for housing one or more decorative elements 3.

The housing seats 9 are slightly spaced out and are connected by the interposition of one or more connection braces 10 so that, once the assembly of all the decorative elements 3 has been completed, these remain at a short distance the one from the other.

In the particular embodiment shown in the figures, the housing seats 9 and the decorative elements 3 are sized substantially matching, only one decorative element 3 being arranged in a housing seat 9.

Alternative embodiments are however possible wherein the housing seats 9 are sized to allow the positioning of two or more decorative elements 3.

Furthermore, other manufacturing solutions cannot be ruled out wherein the housing seats 9 are not spaced out but rather adjacent to one another, the supporting element 2 consisting of a drape of regular shape and without interruption; clearly, in such manufacturing solution, the connection braces 10 are not provided.

Usefully, the supporting element 2 can be folded over; such feature is obtained by exploiting not only the possibility of folding the supporting element 2 in correspondence to the connection braces 10 which, because of their tapered shape, act as preferential folding points, but also the consistency and the flexibility of the material making up the supporting element 2, i.e., the moquette.

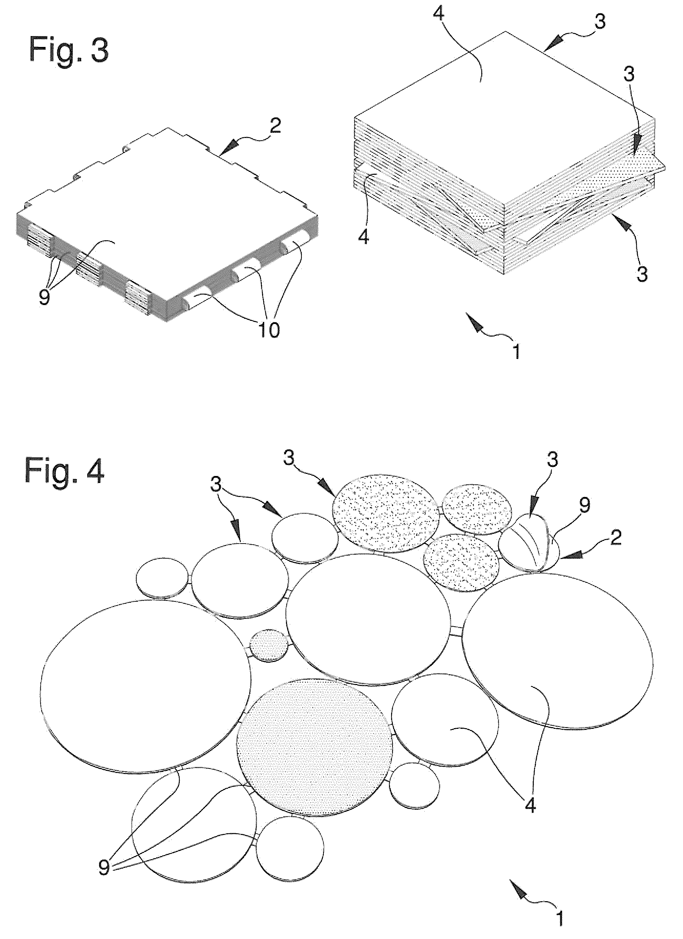

In the light of such flexibility, it is underlined that the manufactured product 1 shown in the figures from I to 3 has a very regular shape, wherein the supporting element 2 is split up in chequered fashion into twenty housing seats 9; during packaging and transport operations, this manufactured product can be usefully compacted as shown in the figure 3, i.e., by folding the housing seats 9 of the supporting element 2 around the connection braces 10 and stacking the decorative elements 3 one on top of the other, making it possible to considerably reduce the total overall dimensions and transferring the assembly stage of the decorative elements 3 only to the interior of the environment to be furnished.

In the case of the manufactured product I shown in figure 4, on the contrary, the irregular shape of the particular chosen pattern in this model does not allow to fold the supporting element 2 only and exclusively around the connection braces 10.

Despite this, the possibility of removing the decorative elements 3, which by conformation and constitution are more rigid, allows exploiting the flexibility of the moquette itself to fold the housing seats 9 over themselves even at points other than the connection braces 10, to compact the overall dimensions of the manufactured product 1 during transport in the same way as occurs in the embodiment shown in the figures from 1 to 3.

The operation of the present invention is as follows.

The manufactured product I is fabricated and distributed on the market keeping the decorative elements 3 separate from the supporting element 2 which, if necessary, can be folded on itself to reduce its total overall dimensions.

Once introduced into the environment to be furnished, the composition of the decorative elements 3 on the supporting element 2 occurs by exploiting the attachment layer 5 and, if required, the possibility of removing one or more of the decorative elements 3 and replacing them with others to fully cater to the aesthetic preferences of clients.

In this respect, it must be underlined that with the manufactured product 1 according to the invention, the public can be provided with great freedom of personalisation, and is able to choose which decorative elements 3 to apply and where to apply them on the supporting element 2, choice which, taking into account the great simplicity of transport, can be done directly inside the environment to be furnished before actually confirming the purchase, to enable the customer to completely determine adequacy and suitability.

The fact that the manufactured product I can be personalised depends on the modularity and interchangeability of its decorative elements 3; the manufactured product 1 is thus able to provide a very high number of possible colour combinations starting with a relatively small number of decorative elements 3, for the viewing of which large spaces are not needed as occur in the sales outlets/showrooms of traditional manufactured products.

It must further be underlined that, depending on the type and requirements of the clientele, the manufactured product 1 can act as either a complementary furnishing item (e.g., a carpet, or be hung on a wall or the like), or as a stable floor covering, in which case the supporting element 2 can be glued to the floor like regular and traditional moquettes.

In this latter case, the particular solution of providing decorative elements 3 having an outer decorative layer 4 in leather and an attachment layer 5 suitable for adhering in a removable way to the supporting element 2 enables the clientele not to have to completely do without its own floor in case of moving house.

In such circumstances in fact, the decorative elements 3, which bear the outer decorative layer 4 in leather and make up the most valuable part of the manufactured product 1, can be removed without any particular problem and be transferred to another environment to be furnished, for which only a new supporting element 2 need be purchased, at a particularly low cost.

## Claims

1. Manufactured product (1) for covering surfaces, **characterised by** the fact that it comprises a substantially sheet-shaped supporting element (2) and a plurality of substantially sheet-shaped decorative elements (3) comprising an outer decorative layer (4) in leather and an attachment layer (5) suitable for adhering in a removable way to said supporting element (2).

2. Manufactured product (1) according to the claim 1, **characterised by** the fact that said leather is chosen from the list comprising: natural leather, imitation leather, eco-leather,

3. Manufactured product (1) according to one or more of the preceding claims, **characterised by** the fact that said attachment layer (5) and said supporting element (2) are associable with a "hook and loop" type system, one between said attachment layer (5) and said supporting element (2) being made of a "hook" type material and the other between said attachment layer (5) and said supporting element (2) being made of a "loop" type material.

4. Manufactured product (1) according to one or more of the preceding claims, **characterised by** the fact that said attachment layer (5) is a "hook" type Velcro fabric.

5. Manufactured product (1) according to one or more of the preceding claims, **characterised by** the fact that said supporting element (2) is made of an at least partially hairy fabric.

6. Manufactured product (1) according to one or more of the preceding claims, **characterised by** the fact that said supporting element (2) is made of a moquette.

7. Manufactured product (1) according to one or more of the preceding claims, **characterised by** the fact that said supporting element (2) is a "loop" type Velcro fabric.

8. Manufactured product (1) according to one or more of the preceding claims, **characterised by** the fact that said supporting element (2) can be folded over.

9. Manufactured product (1) according to one or more of the preceding claims, **characterised by** the fact that said decorative elements (3) comprise an intermediate layer (8) in soft material placed between said outer decorative layer (4) and said attachment layer (5).

10. Manufactured product (1) according to the claim 9, **characterised by** the fact that said soft material is foam rubber.

11. Manufactured product (1) according to one or more of the preceding claims, **characterised by** the fact that said outer decorative layer (4) is associated with said attachment layer (5) by interposition of a layer of adhesive material.

12. Manufactured product (1) according to one or more of the preceding claims, **characterised by** the fact that said outer decorative layer (4) is associated with said attachment layer (5) only in correspondence to the perimeter portion of said decorative elements (3).

13. Manufactured product (1) according to one or more of the preceding claims, **characterised by** the fact that said supporting element (2) is divided into a plurality of housing seats (9) for housing said decorative elements (3).

14. Manufactured product (1) according to one or more of the preceding claims, **characterised by** the fact that said housing seats (9) are connected together by interposition of at least a connection brace (10).

15. Manufactured product (1) according to one or more of the preceding claims, **characterised by** the fact that said housing seats (9) and said decorative elements (3) are sized substantially matching.
